Europäisches Patentamt

European Patent Office

Office européen des brevets

(11) Veröffentlichungsnummer: **0 296 605 B1**

(12) **EUROPÄISCHE PATENTSCHRIFT**

(45) Veröffentlichungstag der Patentschrift: **04.03.92**

(51) Int. Cl.5: **B60C 11/00**, B60C 11/11

(21) Anmeldenummer: **88110096.0**

(22) Anmeldetag: **24.06.88**

(54) **Fahrzeugluftreifen.**

(30) Priorität: **24.06.87 DE 3720854**
**15.07.87 DE 3723368**

(43) Veröffentlichungstag der Anmeldung:
**28.12.88 Patentblatt 88/52**

(45) Bekanntmachung des Hinweises auf die
Patenterteilung:
**04.03.92 Patentblatt 92/10**

(84) Benannte Vertragsstaaten:
**DE FR GB IT SE**

(56) Entgegenhaltungen:
DE-A- 3 720 908
FR-A- 2 291 879
GB-A- 2 046 188
US-A- 4 700 762

PATENT ABSTRACTS OF JAPAN, Band 10,
Nr. 238 (M-508)[2294], 16. August 1986; &
JP-A-61 71 208 (SUMITOMO) 12-04-1986

(73) Patentinhaber: **UNIROYAL ENGLEBERT Reifen
GmbH
Hüttenstrasse 7
W-5100 Aachen(DE)**

(72) Erfinder: **Senger, Gerhard Dr.-Ing. Dipl.-Ing.
Bergstrasse 16
W-5106 Roetgen-Rott(DE)**

Rank Xerox (UK) Business Services

## Beschreibung

Die Erfindung bezieht sich auf einen Fahrzeugluftreifen in Radialkarkassenbauart mit einem gürtelartig verstärkten, profilierten Laufstreifen, dessen Laufflächenprofil aus drehrichtungsgebunden vorliegenden Profilelementen besteht, die sowohl in Umfangsreihen angeordnet, durch Umfangsrillen getrennt, als auch in Querreihen angeordnet, durch Querrillen getrennt, vorliegen. Derartige Reifen sind z.B. durch die FR-A-2291879 bekannt, die dem Oberbegriff des Anspruchs 1 entspricht.

Im allgemeinen stellt eine bestimmte Gestaltung der Lauffläche einen Kompromiß zwischen zumindest teilweise sich einander widersprechenden Tatbeständen dar. So stehen beispielsweise eine hohe Rutschfestigkeit und der Widerstand gegen Aufschwimmen (Aquaplaning) ebenso in einem Zielkonflikt wie eine hohe Rutschfestigkeit und ein präzises Lenkverhalten auf trockener Fahrbahn.

Je nach der Zweckbestimmung der Laufflächenprofilierung ist es möglich, die eine oder andere Eigenschaft zu optimieren. Dadurch wird eine Verbesserung der jeweiligen Eigenschaft erzielt. Der Kompromiß wird jedoch nur verlagert; denn er wird nicht zugunsten einer bestimmten Eigenschaft aufgegeben.

Anders dagegen verhält es sich bei einer Laufflächengestaltung, bei der das Laufflächenprofil gezielt auf eine bestimmte Eigenschaft hin ausgerichtet wird. Diese Eigenschaft bestimmt dann im wesentlichen bzw. weitgehend die Funktion des Laufflächenprofils. Nach der Zielvorstellung der Erfindung soll das Laufflächenprofil besonders nässetauglich ausgebildet werden.

Die Aufgabe der Erfindung besteht darin, das Laufflächenprofil für hohe Wasseraufnahmefähigkeit, Wasserverdrängung und Wasserableitung, sowohl was die Laufflächenkrümmung und das Profilgrundmuster, als auch die Ausbildung der Profilrillen anbetrifft, zu gestalten und die Positivanteile der Profilelemente für einen gleichmäßigen Abrieb sowie eine hohe Haftung und Lenkpräzision auf trockener Fahrbahn im größtmöglichen Umfang im Laufflächenmittenbereich anzuordnen.

Erfindungsgemäß wird diese Aufgabe bei einem gattungsgemäßen Reifen dadurch gelöst, daß eine stark gekrümmte Lauffläche mit einem Laufflächenradius R von der 1,8 bis 0,9fachen Reifenquerschnittsbreite vorliegt und daß die Profilelemente eine geböscht ausgebildete Rückenfläche und eine steile Vorderfläche aufweisen, so daß der Querschnitt der Querrillen sägezahnartig ist.

Durch die Kombination dieser Merkmale ist ein hoch nässetaugliches Fahrzeugreifenprofil vorhanden; denn aufgrund der stark gekrümmt ausgebildeten Lauffläche ist die Aufstandsfläche verhältnismäßig schmal. Zum Vermeiden des Aufschwimmens ist dadurch lediglich ein verhältnismäßig geringes Wasservolumen aus der Mitte zu verdrängen. Die schmale Aufstandsfläche bewirkt des weiteren eine erhöhte Druckverteilung in der Mitte der Aufstandsfläche. Dadurch wird eine Wasserverdrängung von der Laufflächenmitte zu den Laufflächenrändern hin mit dem bestmöglichen Wirkungsgrad erzielt. Aufgrund des drehrichtungsgebundenen, pfeilförmig gestalteten Profils ist eine Keilwirkung bei der Zerteilung der Wasserflächen in Form von Wasserlachen oder des die Straße bedeckenden Wasserfilms vorhanden. Um günstige Abströmverhältnisse zu erhalten, ist der Pfeilungswinkel im Bereich der Laufflächenmitte verhältnismäßig spitz. Zum Laufflächenrand hin nimmt die Pfeilung der Profilelemente ab. Außerdem sind die Profilelemente so angeordnet, daß sich die schrägorientierten Querrillen trompetenförmig zum Laufflächenrand hin öffnen. Je nach der Gesamtbreite der Aufstandsfläche ist im Laufflächenmittenbereich entweder eine Umfangsreihe von gepfeilten Profilelementen oder eine gerade umlaufende Mittelrille angeordnet. Alle Umfangsrillen sind in Laufrichtung des Fahrzeugreifens gerade verlaufend ausgebildet. In Verbindung mit der stark gewölbt ausgebildeten Lauffläche ist ein solches Laufflächenprofil ausreichend groß geöffnet.

Durch diese Maßnahmen wird die Aufteilung der Wasservolumina und die Wasserverdrängung in einer verhältnismäßig schmalen elliptischen Aufstandsfläche wie auch die Ableitung der Wasservolumina in die Seitenrillen mit einem hohen Wirkungsgrad erreicht.

Die verhältnismäßig starke Mittenkrümmung der Lauffläche bewirkt eine Tendenz zum Mittenabrieb. Durch die trompetenförmige Rillenanordnung liegt nun jedoch eine stark unterschiedliche Verteilung der Positiv-und Negativanteile der Profilelemente zwischen der Laufflächenmitte und dem Laufflächenschulterbereich vor. Der im Laufflächenmittenbereich vorliegende höhere Positivanteil wirkt nun dem Mittenabrieb entgegen und der im Laufflächenrandbereich vorliegende hohe Negativanteil begünstigt die Drainage. Aufgrund der verhältnismäßig stark gekrümmten Lauffläche sowie der vorhandenen Positiv-/Negativanteile in der Verteilung über die Laufflächenbreite und der trompetenförmigen Schrägrillen werden einerseits ein optimierter Widerstand gegen das Aufschwimmen und andererseits ein gewünschtes gleichmäßiges Abriebsbild erreicht.

Durch die geböscht ausgebildete Rückenfläche jedes Profilelements werden ein günstiger Rillenquerschnitt des drehrichtungsgebundenen Profils und ein günstiger verringerter spezifischer Flächendruck erreicht.

Der Widerstand gegen Aufschwimmen und die Rutschfestigkeit stehen insoweit in einem Zielkonflikt, als der hohe Widerstand gegen Aufschwimmen einen hohen Negativanteil des Profils erfordert, um genügend Drainage zur Verfügung zu stellen. Eine hohe Rutschfestigkeit verlangt einen hohen Positivanteil des Profils, damit die Flächenpressung zwischen Profilelement und Fahrbahn klein bleibt; denn ein geringer spezifischer Flächendruck bewirkt eine höhere Bodenhaftung.

Die geböschte Rückenfläche des Profilelements trägt diesen einander widersprechenden Tatsachen Rechnung. Die Grundidee zur Auflösung des Konflikts besteht darin, den aus der Aufstandsfläche herauszunehmenden Positivanteil an der Stelle wegzunehmen, an der der Positivanteil den geringsten Beitrag zum bestmöglichen Wirkungsgrad für die Rutschfestigkeit leistet, nämlich im Bereich der Hinterkante eines drehrichtungsgebundenen Profilelements.

Eine stark gerundete Lauffläche ergibt ein deutlich verbessertes Lenkverhalten und einen verbesserten Fahrkomfort gegenüber flach verlaufenden Laufflächen.

Bei einer in dieser Art ausgebildeten Lauffläche ist die Bodenaufstandsfläche verhältnismäßig schmal. Es ist ein verhältnismäßig geringes Wasservolumen aus der Laufflächenmitte zu verdrängen. Die erhaltene schmale Aufstandsfläche bewirkt eine erhöhte Druckverteilung. Dadurch wird eine Wasserverdrängung von der Lauffläche bis zu den Laufflächenrändern mit einem hohen Wirkungsgrad erzielt. Um den Widerstand gegen ein Aufschwimmen bei Breitreifen bei höheren Fahrgeschwindigkeiten zu verbessern, ist die Laufflächenkrümmung aus zwei oder mehr als zwei Laufflächenradien gebildet und die Laufflächenradienübergänge liegen radial vertieft vor.

Aufgrund dieser Ausbildung stehen je Reifenhälte gerundete Laufflächen zur Verfügung, die insbesondere bei Breitreifen mit einem Höhen- zu Breitenverhältnis H/B von 0,6 bis 0,45 und kleiner jeweils stark verkleinerte Reifenaufstandsflächen ergeben. Hierdurch wird der Widerstand gegen Aufschwimmen bei höheren Fahrgeschwindigkeiten weiter verbessert. Die Profilelemente, die aus einer Kautschukmischung mit einem verhältnismäßig geringen Elastizitätsmodul bestehen, können in einer zur Reifenmittenebene symmetrischen oder asymmetrischen Anordnung vorliegen.

Durch diese Anordnung des gepfeilten Profilgrundmusters wird ein dem Vorspureffekt vergleichbarer Effekt erzielt. Dadurch wird die Lenkpräzision auf trockener Fahrbahn weiter verbessert.

Hohe Rutschfestigkeit und präzises Fahrverhalten auf trockener Fahrbahn stehen insoweit in einem Zielkonflikt, als eine hohe Rutschfestigkeit einen geringen Elastizitätsmodul der Laufflächenkautschukmischung verlangt, die ihrerseits jedoch eine geringere Lenkpräzision bewirkt. Durch die vorgesehene Profilgestaltung ist bei Geradeauslauf eine Seitenkraft auf den Fahrzeugreifen zu erzielen, die in der Wirkung einer Vorspur einer entsprechend ausgebildeten Lenkgestängeanordnung gleichkommt. Die Vorspur an den Fahrzeugrädern der Vorder und -Hinterachse bewirkt insoweit eine verbesserte Lenkpräzision auf trockener Fahrbahn.

Die vorbeschriebenen Maßnahmen an einem Laufflächenprofil mit einer besonderen Nässetauglichkeit, die durch drehrichtungsgebundene Profilelemente in einer bestimmten Positiv- und Negativverteilung, durch trompetenförmige Querrillen und durch einen Sägezahnrillenquerschnitt erreicht werden, sind des weiteren zu ergänzen durch Maßnahmen in Bezug auf die Pfeilungswinkel der gepfeilten Profilelementanordnung. Der Pfeilungswinkel des zentralen Profilelements ist spitzwinklig. Die Pfeilungswinkel der weiteren Profilblöcke können in der einen wie der anderen Laufflächenhälfte gleich, jedoch entgegengerichtet sein. Sie können jedoch auch zum Unterstützen einer Vorspurwirkung von der Reifenmittenebene aus betrachtet mehr oder weniger unterschiedlich gestaltet sein. Zu diesem Zweck werden die Pfeilungswinkel der Profilelemente der einen und anderen Laufflächenhälfte unterschiedlich ausgewählt.

Diese Gestaltungsmöglichkeiten dienen zusätzlich zum Ausgleichen des zum Erzielen einer hohen Rutschfestigkeit notwendigen geringen Elastizitätsmoduls der Laufflächenmischung, indem durch die vorgenannte Profilgestaltung eine Vorspurwirkung durch die Profilanordnung erreicht wird, die die Lenkpräzision eines nässetauglichen Reifenprofils auch auf trockener Fahrbahn verbessert. Der Zielkonflikt der Rutschfestigkeit und Lenkpräzision ist insoweit teilweise dadurch aufgelöst worden, daß eine vorhandene rutschfeste Laufflächenmischung mit einem niedrigen Elastizitätsmodul und dessen nachteilige Wirkung auf die Lenkpräzision durch die Vorspurwirkung des ohnehin auf die Gestaltung der Leiteigenschaft einer für hohe Nässetauglichkeit ausgebildeten Laufflächenprofils mehr als wettgemacht wird.

Nach einem weiteren Gestaltungsmerkmal können die Laufflächenkrümmungen je Reifenhälfte symmetrisch ausgebildet sein. Das Profilelementmuster kann symmetrisch oder asymmetrisch vorliegen. Nur in Sonderbaufällen wird die Laufflächenkontur asymmetrisch sein.

Bei symmetrischer Kontur können bevorzugt vier axial nebeneinander befindliche Laufflächenabschnitte mit eigenen Laufflächenradien vorliegen. Des weiteren kann das Positiv/Negativverhältnis der Profilelemente von der Reifenmitte bis zum Außenrand verringert vorliegen. Es kann sich im Bereich von 10% bis zu 15% verringern.

Durch die vorgenannten Ausbildungsmerkmale ergeben sich weitere zusätzliche Möglichkeiten, das Reifenprofil für eine hohe Nässetauglichkeit offen zu gestalten, ohne daß dies auf Kosten der Bodenhaftung und Rutschfestigkeit geht.

Die Erfindung ist an Hand von Ausführungsbeispielen erläutert; es zeigt

Fig. 1    einen Querschnitt durch ein Fahrzeugreifenprofil,

Fig. 2    eine Teilaufsicht auf ein symmetrisches gepfeiltes Laufflächenprofil,

Fig. 3    eine Teilaufsicht auf ein asymmetrisches gepfeiltes Laufflächenprofil,

Fig. 4    eine Teilaufsicht auf ein abgewandeltes asymmetrisches gepfeiltes Laufflächenprofil,

Fig. 5    einen Querschnitt durch ein weiteres Fahrzeugreifenprofil,

Fig. 6    einen Querschnitt durch ein weiter abgewandeltes Fahrzeugreifenprofil,

Fig. 7    eine Teilaufsicht auf ein symmetrisches Laufflächenprofil eines Fahrzeugreifens mit Querschnitt nach Fig. 6,

Fig. 8    einen Schnitt in der Ebene x-x durch ein bekanntes Laufflächenprofil,

Fig. 9    einen Schnitt nach der Linie A-A in Fig. 2 (vergrößerte Darstellung).

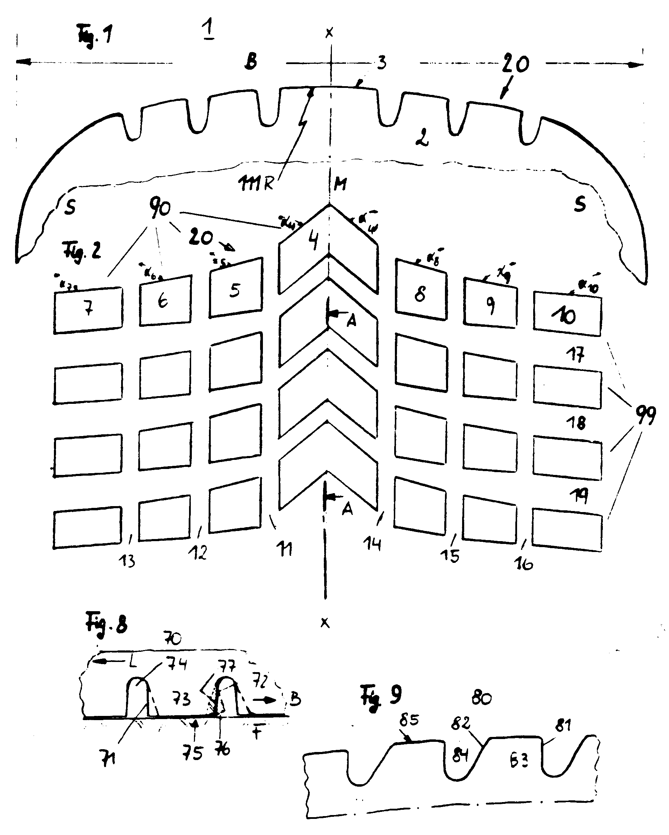

Der Fahrzeugluftreifen 1 mit einem besonders nässetauglichen Laufflächenprofil nach Fig. 1 weist einen verhältnismäßig kleinen Laufflächenradius 111 R auf. Je nach dem Querschnittsverhältnis des Reifens beträgt der Radius 111 R 90% bis 180% der Reifenquerschnittsbreite B. Im vorliegenden Falle ist 111 R = 252 mm bei einer Reifenquerschnittsbreite B von 210 mm.

Die stark gekrümmt ausgebildete Lauffläche 3 des Laufstreifens 2 weist eine verhältnismäßig schmale elliptische Aufstandsfläche auf. Sie bewirkt eine höhere Druckverteilung in der Laufflächenmitte im Vergleich zur Laufflächenschulter, so daß dadurch eine Wasserverdrängung mit einem hohen Wirkungsgrad von der Laufflächenmitte zum Laufflächenrand erfolgt.

Die Fig. 2 zeigt dazu ein drehrichtungsgebundenes, pfeilförmig gestaltetes, symmetrisches Laufflächenprofil 20, das aus den Profilelementen 4 bis 10 besteht. Diese Profilelemente sind durch in Umfangsrichtung geradlinig ausgebildete Längsrillen 11 bis 16 und durch schrägorientierte Querrillen 17 bis 19 voneinander getrennt. Die Profilelemente sind sowohl in Umfangsreihen 90 als auch in Querreihen 99 angeordnet.

Das Positiv/Negativ-Verhältnis der Profilelemente ist im Mittenbereich höher als im Schulterrandbereich.

Der Pfeilungswinkel $\alpha 4$ und $\alpha 4'$ des Profilelements 4 sind - gemessen zur Reifenmittenebene x-x - verhältnismäßig spitz. Die Pfeilungswinkel $\alpha 5$ bis $\alpha 7$ und $\alpha 8$ bis $\alpha 10$ der weiteren Profilelemente 5 bis 10 sind dagegen etwas stumpfer.

Dadurch nimmt die Pfeilung der Profilelemente von der Laufflächenmitte M bis zum Laufflächenrand S ab.

Die Querrillen 17 bis 19 des Laufflächenprofils 20 nach Fig. 2 sind trompetenförmig vom Laufflächenmittenbereich M zum Laufflächenrand S hin geöffnet ausgebildet. Dadurch werden die Abströmungsverhältnisse des aufgenommenen Wassers begünstigt. Durch die trompetenförmigen Querkanäle ist die Verteilung der Positiv- und Negativanteile des Laufflächenprofils zwischen der Reifenmitte und der Reifenschulter unterschiedlich. Im Mittenbereich ist der Positivanteil der Elemente höher als im Schulterbereich. In der Laufflächenmitte wirkt dieser höhere Positivanteil dem durch die stärker gekrümmte Lauffläche vorliegenden Mittenabrieb entgegen. In der Laufflächenschulter begünstigt der höhere Negativanteil die Drainage. Durch die stark gerundete Lauffläche sowie die vorgenannte Aufteilung der Positiv- und Negativanteile des Laufflächenprofils und durch die trompetenförmig ausgebildeten Querrillen wird insgesamt ein hoher Widerstand gegen das Aufschwimmen erzielt. Zugleich werden jedoch die Abriebbilder im Laufflächenmittenbereich und in den Laufflächenschulterbereichen vergleichmäßigt.

Die Querschnittsform der Querrillen ist aus Fig. 9 ersichtlich. Es ist ein Querschnitt durch die Profilelemente gemäß Schnitt A-A in Fig. 2 dargestellt. Die Vorderseite 81 des Profilelements 83 ist steil abfallend ausgebildet, während die Rückenseite 82 des Profilelements stark geböscht ausgebildet ist. Durch diese Flächenausbildung liegt ein sägezahnartiger Querschnitt der Rille 84 eines drehrichtungsgebundenen Laufflächenprofils 80 vor, das bestmöglich geeignet ist für eine hohe Drainage und für eine hohe Rutschfestigkeit. Eine solche Rille 84 der Lauffläche 85 bleibt auch bei Bremskraftwirkung genügend weit geöffnet.

An Hand der Fig. 8 ist bei einem üblichen Profilelement 73 eines Laufflächenprofils 70 mit einer bekannten, von im wesentlichen parallelen Vorder- und Rückenseiten 71, 72 gebildeten Querrille 74 die Auswirkung bei einer wirksamen Bremskraft B eines in Laufrichtung L bewegten Profilelements erklärt. Durch die Bremskraft bedingt hebt die Rükkenfläche 72 des Profilelements 73 von der Aufstandsfläche F ab. Siehe hierzu den Teil 76 der Lauffläche 75. Die abhebende Fläche leistet durch das Kippen keinen Beitrag mehr zur Rutschfestigkeit. Der schraffiert dargestellte Teil 77 der Rükkenfläche ist insoweit entbehrlich.

Die Maßnahme zur Ausbildung des neuen Rillenquerschnitts nach Fig. 9 besteht darin, den aus der Aufstandsfläche herauszunehmenden Positivanteil an der Stelle des Profils wegzunehmen, die den geringsten Wirkungsgradbeitrag für die Rutschfestigkeit besitzt, d.i. der Teil der Rückenfläche des Profilelements. Aus dieser Erkenntnis wird nun die Rückenfläche 82 des Profilelements 83 gemäß Fig. 9 stark gebscht ausgebildet.

Der Querschnitt der Rille 84 und des Profilelements 83 weisen dadurch eine Sägezahnform auf. Der Rillenquerschnitt ist vergrößert und dadurch ist die Drainage verbessert. Dieser Querschnitt bleibt auch ausreichend geöffnet bei Bremszustand auf nasser Fahrbahn erhalten, damit kein Drainageproblem entstehen kann. Die Aufstandsfläche 85 ist so groß bemessen, daß ein verringerter spezifischer Flächendruck erhalten wird, der eine höhere Bodenhaftung bewirkt.

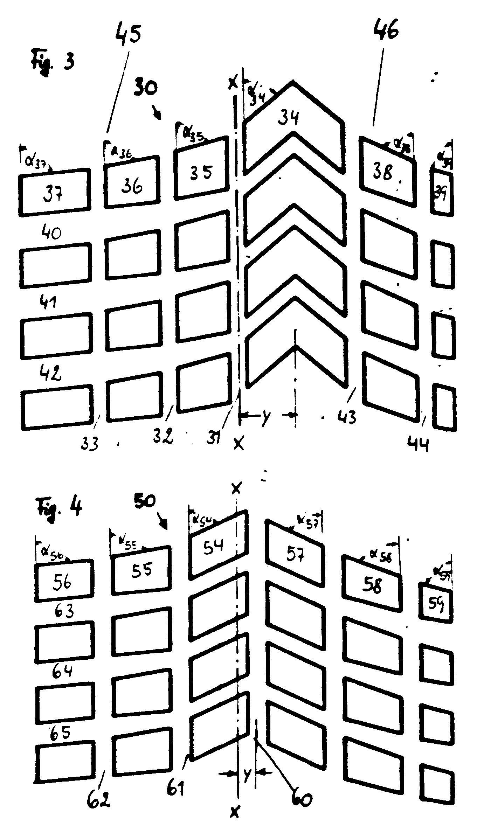

Die Laufflächenprofile 30 gemäß Fig. 3 und 50 gemäß Fig. 4 sind asymmetrisch in Bezug auf die Reifenmittenebene x-x angeordnet.

Durch diese Anordnungen werden bei Geradeauslauf mehr oder weniger große Seitenkraftwirkungen am Reifen erzielt, die der Wirkung einer Vorspur entsprechen. Die Profilierung der Laufflächenhälfte 45 ist unterschiedlich zur Laufflächenhälfte 46.

Die Asymmetrie des Profils 30 ist von der Reifenmitte M aus gesehen in der Laufflächenhälfte 46 vorhanden. Diese Profilierung dient zusätzlich zum Ausgleich eines zur Erzielung hoher Rutschfestigkeit notwendigen geringen Elastizitätsmoduls der Laufflächenmischung. Eine solche Mischung weist beispielsweise eine Shore Härte A von etwa 62° bis 64° auf. Durch die Maßnahme der Vorspurerzeugung wird die Lenkpräzision eines hoch nässetauglichen Laufflächenprofils auch für trockene Fahrbahnverhältnisse verbessert.

Das Profil 30 gemäß Fig. 3 besteht aus den Profilelementen 34 bis 39, wobei das Profilelement 34 Pfeilform aufweist. Der Pfeilungswinkel $\alpha$34 ist spitz. Das Profilelement 34 ist eines von in einer Umfangsreihe angeordneten Profilelementen, die um das Maß y - gemessen zwischen Reifenmittenebene x- x und der Pfeilungsspitze des Profilelements 34 - außermittig angeordnet sind.

Die linkshälftig angeordneten Profilelemente 35 bis 37 mit weniger spitzen Pfeilungswinkeln $\alpha$35 bis $\alpha$37 und die rechtshälftig angeordneten Profilelemente 38 und 39 mit ebenfalls weniger spitzen Pfeilungswinkeln $\alpha$38, $\alpha$39 im Vergleich zu $\alpha$34 bilden zusammen ein asymmetrisches Reifenprofil.

Die Umfangsrillen 31 bis 33 und 43, 44 sind gerade verlaufend ausgebildet. Die schrägen Querrillen 40 bis 42 sind derart ausgebildet, daß sie sich von der Reifenmitte zur Reifenschulter hin trompetenförmig öffnen.

Das Profil 50 gemäß Fig. 4 besteht aus den Profilelementen 54 bis 59 und ist durch ein geringes Maß y weniger asymmetrisch ausgebildet als das Profil 30.

Die Pfeilungswinkel $\alpha$54, $\alpha$57 sind spitzer als die Pfeilungswinkel $\alpha$55, $\alpha$56 und $\alpha$58, $\alpha$59 ausgebildet. Dadurch ergibt sich eine zum Laufflächenrand hin abnehmende Profilpfeilung. Die Winkel $\alpha$54 und $\alpha$57 und/oder $\alpha$55 und $\alpha$58 können gleich, jedoch entgegengerichtet, sie können auch ungleich entgegengerichtet vorliegen. Die Umfangsrillen 60 bis 62 sind gerade ausgebildet. Die schrägen Querrillen 63 bis 65 sind trompetenförmig zur Reifenschulter hin geöffnet ausgebildet.

In beiden Ausführungen der Asymmetrieanordnung der Profile wird eine Seitenkraftwirkung bei Geradeauslauf erzielt, die der Wirkung einer Vorspureinstellung gleichkommt.

Sie ist bei dem Profil 30 stärker als bei dem Profil 50 ausgebildet. Auf diese Weise wird die Lenkpräzision eines hoch nässetauglichen Profils zusätzlich verbessert.

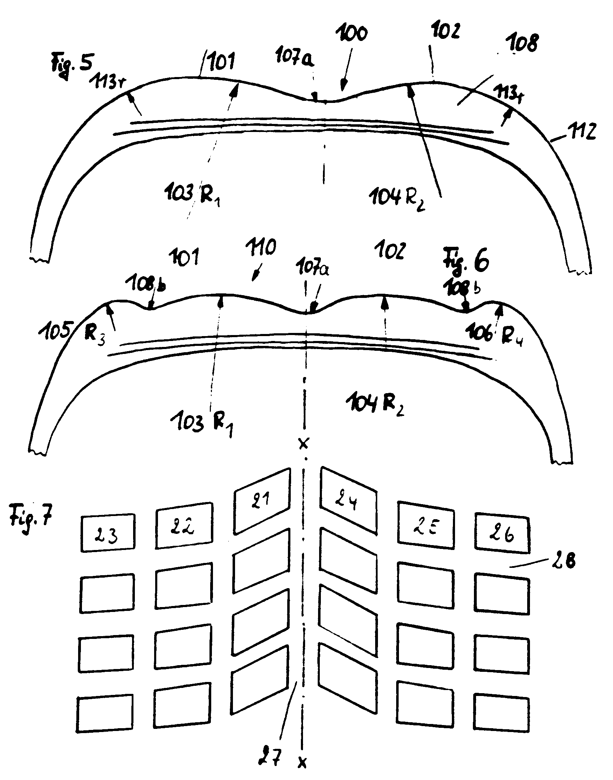

Nach Fig. 5 ist der Querschnitt des Laufstreifens 108 mit der Lauffläche 100 eines Fahrzeugluftreifens mit einem H/B-Verhältnis (Höhe zu Breite-Querschnitt) von 0,6 bis 0,45 in abgewandelter Form dargestellt. Der Querschnitt des Laufstreifens 108 dieses hoch nässetauglich ausgebildeten Laufflächenprofils besteht aus in den beiden Laufflächenhälften 101 und 102 stark gekrümmten, symmetrischen Laufbänderbereichen mit den Laufflächenkrümmungsradien 103 $R_1$ und 104 $R_2$. Dabei betragen 103 $R_1$, 104 $R_2$ jeweils 80 mm. Der Übergangsradius 107 a beträgt 30 mm. Die Radien 113 r der Reifenschultern 112 betragen 45 mm. Hierdurch ist die Lauffläche eines Breitreifens mit zwei stark gekrümmten Laufflächen ausgestattet. Dies ergibt verhältnismäßig kleine elliptische Aufstandsflächen.

Der Mittenbereich bleibt als großzügig ausgelegte Entwässerungsrinne jederzeit offen.

Der Querschnitt 110 des ebenfalls hoch nässetauglich ausgebildeten Laufflächenprofils nach Fig. 6 wird aus in den Laufflächenhälften 101 und 102 stark gekrümmten, symmetrischen Laufbandbereichen mit den Laufflächenkrümmungsradien 103 $R_1$, 104 $R_2$, 105 $R_3$ und 106 $R_4$ gebildet.

Die Radien 103 $R_1$, 104 $R_2$ betragen jeweils 50 mm 105 $R_3$, 106 $R_4$ jeweils 12 mm. Der Übergangsradius 107 a beträgt 10mm und 108 b beträgt 5 mm. Bei dieser Ausbildungsform sind vier Aufstandsflächen elliptischer Form an den Stellen der höchsten Erhebung vorhanden. Dazwischen liegen jeweils großzügige Entwässerungsrinnen in den Bereichen 107 und 108 vor.

Unterstützt wird diese Profilierung durch die Profilelementanordnung nach Fig. 7. Sie besteht aus den gepfeilt angeordneten Profilelementen 21, 24, den jeweils axial daneben angeordneten Profilelementen 22, 25 und den schulterseitigen Profilelementen 23, 26. Die in Umfangsrichtung gerade verlaufenden Umfangsrillen sind mit 27 und die trompetenförmig nach außen geöffneten Querrillen sind mit 28 bezeichnet.

Breitreifen mit einem H/B-Verhältnis von 0,6 bis 0,45 und darunter, die an Fahrzeugen für hohe Geschwindigkeiten zugelassen sind, weisen aufgrund der stark gekrümmten Laufflächenbereiche und dem gepfeilten Laufflächenprofil einen sehr hohen Widerstand gegen Aufschwimmen auf, sind sowohl bei nassen, wie auch bei trockenen Fahrbahnen lenkpräzise und hoch rutschfest und hoch nässetauglich.

Die einzeln vorgestellten Laufflächen können in Abstimmung mit dem Fahrzeughersteller individuell ausgewählt und je nach Fahrzeug optimal ausgeführt werden.

## Patentansprüche

1. Fahrzeugluftreifen (1) in Radialkarkassenbauart mit einem gürtelartig verstärkten, profilierten Laufstreifen (2; 108), dessen Laufflächenprofil (20; 30; 50; 80) aus drehrichtungsgebunden vorliegenden Profilelementen (4 bis 10 21 bis 26, 34 bis 39, 54 bis 59) besteht, die sowohl in Umfangsreihen (90), durch Umfangsrillen (11 bis 16; 27; 31-33; 43, 44; 60-62) getrennt, als auch in Querreihen (99), durch Querrillen(17 bis 19; 28; 40-42; 63-65) getrennt, angeordnet sind, wobei das Laufflächenprofil (20; 30; 50; 80) gepfeilt vorliegt, die Umfangsrillen gerade verlaufend ausgebildet und die Querrillen schräg orientiert sind, wobei eine von der Reifenmitte (M) bis zur Reifenschulter (S) abnehmende Pfeilung vorliegt, und die Querrillen sich in Richtung zu der Reifenschulter (S) hin trompetenförmig erweitern, dadurch gekennzeichent, daß eine stark gekrümmt ausgebildete Lauffläche (3; 101, 102) mit einem 1,8 bis 0,9 fachen Reifenquerschnittsbreite (B) betragenden Laufflächenradius (111 R), und daß die Profilelemente (4 bis 10, 21 bis 26, 34 bis 39, 54 bis 59) eine geböscht ausgebildete Rükenfläche (82) und eine steile Vorderfläche (81) aufweisen, so daß der Querschnitt der Querrillen (17 bis 19, 84) sägezahnförmig ist.

2. Fahrzeugluftreifen nach Anspruch 1, dadurch gekennzeichnet, daß die Lauffläche (100) aus zwei oder mehreren Laufflächenbereichen, insbesondere Laufflächenhälften (101, 102), mit entsprechenden Laufflächenradien (103 $R_1$, 104 $R_2$, 105 $R_3$, 106 $R_4$) gebildet ist und die Laufflächenübergänge (107 a, 108 b) radial vertieft vorliegen.

3. Fahrzeugluftreifen nach Anspruch 1 oder 2, dadurch gekennzeichnet, daß die aus einer Kautschukmischung mit einem geringen Elastizitätsmodul gebildeten Profilelemente (4 bis 10, 21 bis 26) in einer zur Reifenmittenebene x-x symmetrischen Anordnung vorliegen.

4. Fahrzeugluftreifen nach Anspruch 1 oder 2, dadurch gekennzeichnet, daß die aus einer Kautschukmischung mit einem geringen Elastizitätsmodul gebildeten Profilelemente (34 bis 39, 54 bis 59) in einer zur Reifenmittenebene x-x asymmetrischen Anordnung vorliegen.

5. Fahrzeugluftreifen nach Anspruch 1 bis 4, dadurch gekennzeichnet, daß die Laufflächenkrümmungen (103 $R_1$, 105 $R_3$) der einen Laufflächenhälfte (101) den Laufflächenkrümmungen (104 $R_2$, 106 $R_4$) der anderen Laufflächenhälfte (102) symmetrisch zugeordnet vorliegen.

6. Fahrzeugluftreifen nach Anspruch 5, dadurch gekennzeichnet, daß die Lauffläche aus vier axial nebeneinander befindlichen Laufflächenbereichen (105, 103, 104, 106) gebildet ist.

7. Fahrzeugluftreifen nach Anspruch 1 bis 6, dadurch gekennzeichnet, daß die Pfeilungswinkel ($\alpha 4$, $\alpha 4'$) des in der Reifenmitte (M) liegenden Profilelements (4) in einem Spitzwinkel zur Reifenmitte (M) vorliegen und gleiche, jedoch entgegengerichtete Neigung aufweisen, und daß die Pfeilungswinkel ($\alpha 5$ bis $\alpha 7$) der Profilelemente der einen Reifenhälfte gleiche, jedoch entgegengerichtete Neigung zu den Pfeilungswinkeln ($\alpha 8$ bis $\alpha 10$) der Profilelemente der anderen Reifenhälfte aufweisen.

8. Fahrzeugluftreifen nach Anspruch 1 bis 7, dadurch gekennzeichnet, daß die Pfeilungswinkel ($\alpha 35$, $\alpha 36$, $\alpha 37$; $\alpha 54$ bis $\alpha 56$) der einen Laufflächenhälfte (45) unterschiedlich zu den Pfeilungswinkeln ($\alpha 38$, $\alpha 39$; $\alpha 57$ bis $\alpha 59$) der anderen Laufflächenhälfte (46) vorliegen.

9. Fahrzeugluftreifen nach Anspruch 1 bis 8, dadurch gekennzeichnet, daß sich das Positiv/Negativ-Verhältnis der Profilelemente (4 bis 10, 21 bis 26, 34 bis 39, 54 bis 59) von der Reifenmitte (M) bis zum Laufflächenrand (S) verringert, insbesondere bis zu einem Bereich von 10% bis 15% verringert.

## Claims

1. Pneumatic vehicle tyre (1) of a radial carcase type of construction, having a belt-like reinforced, profiled tread strip (2; 108)), the tread surface profile (20; 30; 50; 80) of which comprises profile elements (4 to 10; 21 to 26; 34 to 39, 54 to 59), which are fixed in the direction of rotation and are disposed both in circumferential rows (90), separated by circumferential grooves (11 to 16; 27; 31 to 33; 43, 44; 60 to 62), and in transverse rows (99), separated by transverse grooves (17 to 19; 28; 40 to 42; 63 to 65), wherein the tread surface profile (20, 30, 50, 80) is swept-back, the circumferential grooves (11 to 16; 27; 31 to 44) extend rectilinearly, and the transverse grooves (17 to 19, 28; 40 to 42, 63 to 65) are inclinedly orientated, wherein there is a sweepback which decreases in size from the tyre centre (M) to the tyre shoulder (S), and the transverse grooves widen, in a trumpet-shaped manner, in the direction towards the tyre shoulder (S), characterised in that an extremely curved tread surface (3, 101, 102) has a tread surface radius (111 R), which amounts to 1.8 to 0.9 times the cross-sectional width (B) of the tyre, and in that the profile elements (4 to 10; 21 to 26, 34 to 39, 54 to 59) have a sloping rear surface (82) and a steep front face (81), so that the cross-section of the transverse grooves (17 to 19, 84) is saw-tooth-shaped.

2.  Pneumatic vehicle tyre according to claim 1, characterised in that the tread surface (100) is formed from two or more tread surface regions, more especially tread surface halves (101, 102), having corresponding tread surface radii (103 $R_1$, 104 $R_2$, 105 $R_3$, 106 $R_4$), and the tread surface transition regions (107 a, 108 b) are radially recessed.

3.  Pneumatic vehicle tyre according to claim 1 or 2, characterised in that the profile elements (4 to 10, 21 to 26), formed from a rubber mixture having a low modulus of elasticity, are disposed symmetrically relative to the central plane x-x of the tyre.

4.  Pneumatic vehicle tyre according to claim 1 or 2, characterised in that the profile elements (34 to 39, 54 to 59), formed from a rubber mixture having a low modulus of elasticity, are disposed asymmetrically relative to the central plane x-x of the tyre.

5.  Pneumatic vehicle tyre according to claims 1 to 4, characterised in that the tread surface curvatures (103 $R_1$, 105 $R_3$) of one tread surface half (101) are symmetrically associated with the tread surface curvatures (104 $R_2$, 106 $R_4$) of the other tread surface half (102).

6.  Pneumatic vehicle tyre according to claim 5, characterised in that the tread surface is formed from four tread surface regions (105, 103, 104, 106) which are situated axially adjacent one another.

7.  Pneumatic vehicle tyre according to claims 1 to 6, characterised in that the sweepback angles ($\alpha 4$, $\alpha 4'$) of the profile element (4), which is situated in the tyre centre (M), are at an acute angle relative to the tyre centre (M) and have an identical, but oppositely orientated, inclination, and in that the sweepback angles ($\alpha 5$ to $\alpha 7$) of the profile elements of one tyre half have an identical, but oppositely orientated, inclination relative to the sweepback angles ($\alpha 8$ to $\alpha 10$) of the profile elements of the other tyre half.

8.  Pneumatic vehicle tyre according to claims 1 to 7, characterised in that the sweepback angles ($\alpha 35$, $\alpha 36$, $\alpha 37$; $\alpha 54$ to $\alpha 56$) of one tread surface half (45) differ from the sweepback angles ($\alpha 38$, $\alpha 39$; $\alpha 57$ to $\alpha 59$) of the other tread surface half (46).

9.  Pneumatic vehicle tyre according to claims 1 to 8, characterised in that the positive:negative ratio of the profile elements (4 to 10, 21 to 26, 34 to 39, 54 to 59) decreases from the tyre centre (M) to the tread surface edge (S), this decrease being, more especially, up to a range of 10% to 15%.

**Revendications**

1.  Pneumatique (1) pour véhicule, du type à carcasse radiale, comportant une bande de roulement (2; 108) profilée et renforcée en forme de ceinture, dont le profil de surface de roulement (20; 30; 50; 80) se compose d'éléments de profil (4 à 10; 21 à 26; 34 à 39; 54 à 59) établis en liaison avec le sens de rotation, qui sont séparés d'une part en rangées circonférentielles (90) par des rainures circonférentielles (11 à 16; 27; 31 à 33; 43, 44; 60 à 62) et d'autre part en rangées transversales (99) par des rainures transversales (17 à 19; 28; 40 à 42; 63 à 65), le profil de surface de roulement (20, 30, 50, 80) étant en forme de flèche, les rainures circonférentielles (11 à 16; 27; 31 à 44) étant d'orientation rectiligne et les rainures transversales (17 à 19; 28; 40 à 42; 63 à 65) d'orientation inclinée, une configuration en forme de flèche diminuant depuis le milieu (M) du pneumatique jusqu'aux épaulements (S) du pneumatique étant prévue, et les rainures transversales s'élargissant en forme de trompettes en direction des épaulements (S) du pneumatique, **caractérisé** en ce qu'une surface de roulement (3; 101, 102) pourvue d'une forte incurvation présente un rayon de surface de roulement (111 R) s'élevant entre 1,8 et 0,9 fois la largeur de section (B) du pneumatique, et en ce que les éléments de profil (4 à 10; 21 à 26; 34 à 39; 50 à 59) comportent une surface dorsale inclinée (82) et une surface frontale verticale (81), de sorte que la section des rainures transversales (17 à 19; 84) est agencée en dents de scie.

2. Pneumatique pour véhicule selon la revendication 1, caractérisé en ce que la surface de roulement (100) est constituée de deux ou plus de deux zones, notamment de moitiés de surface de roulement (101,102), présentant des rayons de surface de roulement correspondants (103 $R_1$, 104 $R_2$, 105 $R_3$, 106 $R_4$), et les transitions entre surfaces de roulement (107 a, 108 b) se présentent radialement en creux.

3. Pneumatique pour véhicule selon la revendication 1 ou 2, caractérisé en ce que tes éléments de profil (4 à 10, 21 à 26), formés d'un mélange caoutchouté de faible module d'élasticité, sont disposés symétriquement par rapport au plan médian x-x du pneumatique.

4. Pneumatique pour véhicule selon la revendication 1 ou 2, caractérisé en ce que les éléments de profil (34 à 39, 54 à 59), formés d'un mélange caoutchouté de faible module d'élasticité, sont disposés asymétriquement par rapport au plan médian x-x du pneumatique.

5. Pneumatique pour véhicule selon l'une des revendications 1 à 4, caractérisé en ce que les courbures (103 $R_1$, 105 $R_3$) d'une des moitiés (101) de la surface de roulement sont associées symétriquement aux courbures (104 $R_2$, 106 $R_4$) de l'autre moitié (102) de la surface de roulement.

6. Pneumatique pour véhicule selon la revendication 5, caractérisé en ce que la surface de roulement est constituée de quatre zones de surface de roulement (105, 103, 104, 106) situées axialement les unes à côté des autres.

7. Pneumatique pour véhicule selon l'une des revendications 1 à 6, caractérisé en ce que les angles de flèche ($\alpha4$, $\alpha4'$) de l'élément de profil (4), qui se trouve au milieu (M) du pneumatique, correspondent à un angle aigu par rapport au milieu (M) du pneumatique et possèdent des inclinaisons identiques mais orientées en sens opposés, et en ce que les angles de flèche ($\alpha5$ à $\alpha7$) des éléments de profil d'une des moitiés du pneumatique possèdent la même inclinaison, mais orientée en sens opposé, que les angles de flèche ($\alpha8$ à $\alpha10$) des éléments de profil de l'autre moitié du pneumatique.

8. Pneumatique pour véhicule selon l'une des revendications 1 à 7, caractérisé en ce que les angles de flèche ($\alpha35$, $\alpha36$, $\alpha37$; $\alpha54$ à $\alpha56$) d'une moitié (45) de la surface de roulement sont différents des angles de flèche ($\alpha38$, $\alpha39$; $\alpha57$ à $\alpha59$) de l'autre moitié (46) de la surface de roulement.

9. Pneumatique pour véhicule selon l'une des revendications 1 à 8, caractérisé en ce que le rapport positif/négatif des éléments de profils (4 à 10, 21 à 26, 34 à 39, 54 à 59) diminue depuis le milieu (M) du pneumatique jusqu'au bord (S) de la surface de roulement, en diminuant notamment jusque dans une plage de 10% à 15%.

Fig. 1

Fig. 2

Fig. 8

Fig. 9

Fig. 3

Fig. 4

Fig. 5

Fig. 6

Fig. 7